# EUROPÄISCHE PATENTSCHRIFT

(11) **EP 2 314 364 B1**
(45) Veröffentlichungstag und Bekanntmachung des Hinweises auf die Patenterteilung: **16.07.2014**
(21) Anmeldenummer: 10186801.6
(22) Anmeldetag: 07.10.2010
(51) Int. Cl.: B01D 29/21, B01D 35/16, B01D 35/153, F02M 37/22

(54) **Filtereinrichtung**
Filter device
Dispositif de filtration

(30) Priorität: 21.10.2009 DE 102009050158
(43) Veröffentlichungstag der Anmeldung: 27.04.2011
(73) Patentinhaber: MAHLE International GmbH, 70376 Stuttgart (DE)
(72) Erfinder: Jensen, Hans, 73265 Dettingen (DE)
(74) Vertreter: BRP Renaud & Partner

(56) Entgegenhaltungen:
- EP-A2- 0 385 113
- EP-A2- 1 233 173
- WO-A1-2004/031542
- DE-A1- 19 951 085
- US-A- 3 502 218

## Beschreibung

Die vorliegende Erfindung betrifft eine Filtereinrichtung mit einem in einem Filtergehäuse stehend angeordneten Ringfilterelement, welches eine obere und eine untere Endscheibe aufweist, gemäß dem Oberbegriff des Anspruchs 1. Die Erfindung betrifft außerdem ein Ringfilterelement für eine derartige Filtereinrichtung.

Eine gattungsgemäße Filtereinrichtung ist hinlänglich bekannt und in nahezu sämtlichen modernen Kraftfahrzeugen zu finden, eingesetzt beispielsweise als Öl- oder Kraftstofffilter.

Aus der EP 1 233 173 A1 ist eine Filtereinrichtung mit einem in einem Filtergehäuse stehend angeordneten Ringfilterelement bekannt. An der unteren Endscheibe des Ringfilterelementes ist dabei ein Schmutztopf vorgesehen.

Aus der DE 199 51 085 A1 ist eine Filtereinrichtung mit einem in einem Filtergehäuse stehend angeordneten Filterelement bekannt. An einer unteren Endscheibe des Ringfilterelementes ist ein Pin angeordnet.

Schließlich ist aus der WO 2004/03142 A1 eine Filtereinrichtung bekannt, bei welcher ebenfalls an einer unteren Endscheibe eines Ringfilterelementes ein stutzenförmiger und in Axialrichtung abstehender Pin vorgesehen ist.

Um eine einwandfreie Filterwirkung gewährleisten zu können, ist es für die Hersteller von derartigen Filtereinrichtungen wichtig, dass nur von ihnen selbst autorisierte oder hergestellte Filterelemente eingesetzt werden. Beim Einsatz von Filterelementen fremder Fabrikate oder Imitate können nämlich nicht nur die Filterleistung beeinträchtigt, sondern zugleich auch Schäden an der Filtereinrichtung verursacht werden. Auf der anderen Seite ist es wünschenswert, Filterelemente für derartige Filtereinrichtungen möglichst kostengünstig herstellen und anbieten zu können.

Die vorliegende Erfindung beschäftigt sich daher mit dem Problem, für eine Filtereinrichtung der gattungsgemäßen Art, eine verbesserte oder zumindest eine alternative Ausführungsform anzugeben, welche insbesondere ausschließlich den Einsatz von autorisierten Filterelementen ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein an sich bekanntes Ringfilterelement, welches stehend in einem Filtergehäuse einer Filtereinrichtung angeordnet ist, bodenseitig mit einem Schmutztopf zu versehen, an welchem zwei abstehende, stutzenförmige Pins ausgebildet sind, von denen einer im Einbauzustand des Ringfilterelements in einen Leerlaufkanal und der andere in einen Entsorgungskanal eingreift. Der Schmutztopf ist dabei an der unteren Endscheibe des Ringfilterelementes angeordnet, beispielsweise angeschweißt, wobei die stutzenförmigen Pins üblicherweise einteilig mit dem Schmutztopf ausgebildet sind und ein Betrieb der Filtereinrichtung ausschließlich dann ermöglicht wird, sofern die Pins in die zugehörigen und am Filtergehäusetopf bzw. an einem Funktionselement angeordneten Kanäle eingreifen. Innerhalb des Schmutztopfes ist darüber hinaus ein Wasserabscheider vorgesehen, so dass der Schmutztopf an sich sowohl als Schmutzsammelraum als auch als Wassersammelraum genutzt werden kann und über einen der beiden Pins, der hohl ausgebildet ist, entleert werden kann. Dieser hohl ausgebildete Pin ermöglicht so einen Wasser- und/oder Schmutzablass in einen separaten Wasser-/Schmutzsammelraum oder aber in die Umgebung, wobei in diesem Fall zusätzlich üblicherweise ein Aktivkohlefilter vorgesehen ist, welches noch im abgeschiedenen Wasser vorhandene Kohlenwasserstoffanteile herausfiltert. Der andere Pin, der nicht hohl ausgebildet ist, dient lediglich zum Verschließen eines Leerlaufkanals und greift somit dichtend in diesen ein, sofern sich das Ringfilterelement in seinem Einbauzustand befindet. Bei einem Entfernen des Ringfilterelements wird dieser Pin aus dem Leerlaufkanal herausgezogen, wodurch das Filtergehäuse leerlaufen kann. Durch insbesondere eine unterschiedliche axiale Länge zwischen den beiden Pins kann erreicht werden, dass der in den Entsorgungskanal eingreifende Pin erst dann aus diesem herausgezogen wird, wenn der andere Pin schon lange aus dem Leerlaufkanal gezogen wurde, so dass die noch im Filtergehäuse vorhandene Flüssigkeit vollständig ablaufen kann, ohne dass die Gefahr besteht, dass die Flüssigkeit gleichzeitig in den Entsorgungskanal gelangt. Mit der erfindungsgemäßen Filtereinrichtung ist es darüber hinaus möglich, dass diese nur verwendet bzw. in Betrieb genommen werden kann, sofern dazu passende Ringfilterelemente mit schmutztopfseitig angeordneten Pins verwendet werden, während der Einsatz anderer Ringfilterelemente, mit welchen unter Umständen die Filterleistung der Filtereinrichtung beeinträchtigt werden könnte, zuverlässig verhindert werden kann. Bei dem Einsatz eines Ringfilterelementes ohne entsprechende Pins funktioniert die erfindungsgemäße Ringfiltereinrichtung überhaupt nicht, da in diesem Fall eine stetige Verbindung zwischen der Rohseite und dem Leerlaufkanal gegeben ist und dadurch keine Filterwirkung erzeugt werden kann.

Bei einer vorteilhaften Weiterbildung der erfindungsgemäßen Lösung, ist der innerhalb des Schmutztopfes angeordnete Wasserabscheider als Coaleszer ausgebildet und gleichzeitig an die untere Endscheibe des Ringfilterelementes angeschweißt. Ein derartiger Coaleszer ist in der Lage, Wasserpartikel zu sammeln und abzuleiten und damit beispielsweise im Kraftstoff vorhandene Wasseranteile herauszufiltern, so dass diese nicht in den Verbrennungsmotor gelangen und dort Korrosionsschäden verursachen können. Die Filtereinrichtung kann in diesem Fall beispielsweise als Öl- oder Kraftstofffilter ausgebildet sein, wobei ganz generell auch eine Ausbildung als Luftfilter denkbar ist. Der Wasserabscheider ist dabei an die untere Endscheibe des Ringfilterelementes angebunden, insbesondere angeschweißt, und kann dadurch vor der Montage bzw. vor dem Schließen des Schmutztopfes exakt positioniert und fixiert werden, was den Herstellungsprozess der erfindungsgemäßen Filtereinrichtung deutlich vereinfacht.

Bei einer weiteren vorteilhaften Ausführungsform der erfindungsgemäßen Lösung, ist am Filtergehäusetopf oder an einem darin angeordneten Funktionselement eine Führung vorgesehen, entlang welcher zumindest einer der beiden Pins bei der Montage des Ringfilterelementes zum Kanal geführt wird. Eine derartige Führung kann beispielsweise in der Art einer Rampe ausgebildet sein, welche ein beliebiges Einsetzen des Ringfilterelementes ermöglicht, so dass dieses mittels des Pins entlang der Führung in den zugehörigen Kanal gleitet und dadurch eine stets richtige Montage gewährleistet werden kann. Eine derartige Führung kann zum einen kostengünstig, beispielsweise durch ein geeignetes Spritzgusswerkzeug, realisiert werden und gewährleistet zum anderen ein deutlich vereinfachtes Handling der erfindungsgemäßen Filtereinrichtung, da das Ringfilterelement in einer beliebigen Drehwinkellage in den Filtergehäusetopf eingesetzt werden und durch ein einfaches Verdrehen in seine richtige und korrekte Stellung überführt werden kann. Eine Fehlmontage des Ringfilterelementes kann dadurch zuverlässig ausgeschlossen werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäßes Ringfilterelement in einer Seitenansicht,
- Fig. 2: ein Zusammenwirken des Ringfilterelementes mit einem Funktionselement,
- Fig. 3: eine Darstellung wie in Fig. 2, jedoch bei einer anderen Drehwinkelstellung des Ringfilterelementes,
- Fig. 4: eine Schnittdarstellung.

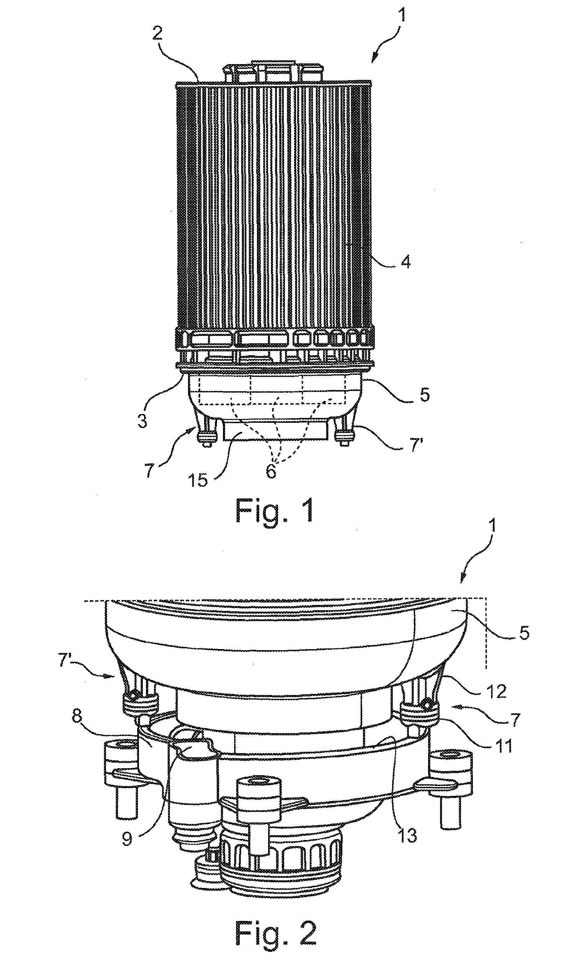

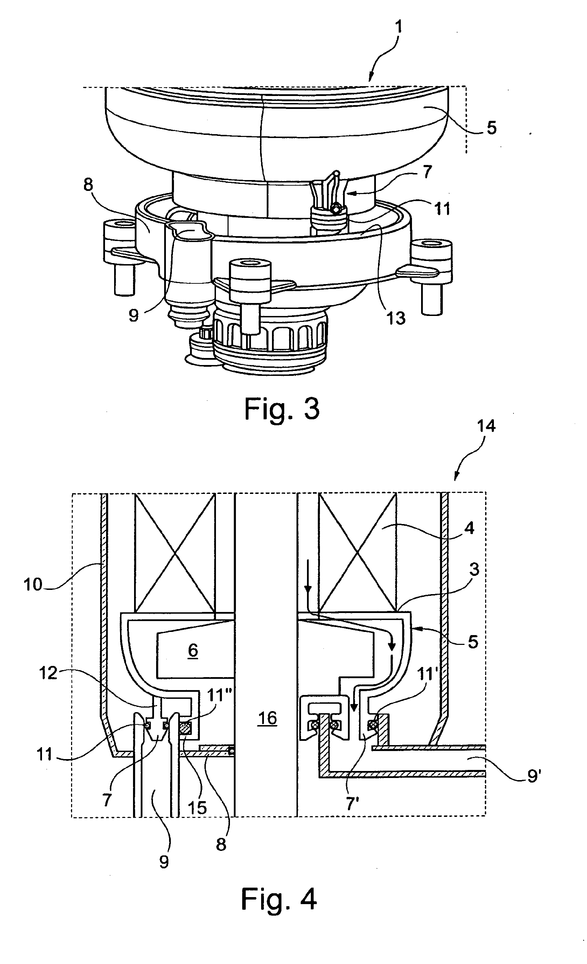

Entsprechend der Fig. 1, weist ein erfindungsgemäßes Ringfilterelement 1 eine obere Endscheibe 2 sowie eine untere Endscheibe 3 auf. Zwischen den beiden Endscheiben 2 und 3 ist dabei ein Filtermaterial 4, beispielsweise in der Art eines Faltensterns, angeordnet. Das Ringfilterelement 1 ist dabei ähnlich der gezeigten Darstellung in Fig. 1 stehend in einem lediglich in Fig. 4 gezeigten Filtergehäusetopf 10 einer Filtereinrichtung 14, beispielsweise eines Öl- oder Kraftstofffilters, angeordnet. Erfindungsgemäß ist nun an der unteren Endscheibe 3 ein Schmutztopf 5 mit einem darin angeordneten und lediglich mit unterbrochen gezeichneter Linie skizziertem Wasserabscheider 6 vorgesehen. Nach unten abstehend sind an dem Schmutztopf 5 zwei stutzenförmige Pins 7 und 7' vorgesehen, die komplementär zu zwei am Filtergehäusetopf 10 oder an einem in diesen einsetzbaren Funktionselement 8 (vgl. Fig. 2) ausgebildeten Kanälen 9, 9', nämlich einem Leerlaufkanal 9 und einem Entsorgungskanal 9', ausgebildet ist. Ein Betrieb der kompletten Filtereinrichtung 14 ist dabei ausschließlich dann möglich, sofern der Pin 7 in den Leerlaufkanal 9 und der Pin 7' in den Entsorgungskanal 9' eingreifen. Der zweite Pin 7' ist dabei hohl ausgebildet und verbindet ein Inneres des Schmutztopfes 5 kommunizierend mit dem Entsorgungskanal 9', wodurch eine Ableitung von abgeschiedenem Wasser und/oder Schmutz ermöglicht wird.

Generell kann der Wasserabscheider 6 als sogenannter Coaleszer ausgebildet und an die untere Endscheibe 3 des Ringfilterelementes 1 angeschweißt sein. Das Anschweißen kann beispielsweise mittels Ultraschallschweißen, Reibschweißen oder Laserschweißen erfolgen und gewährleistet ein zuverlässiges Positionieren und Fixieren des Wasserabscheiders 6 an der unteren Endscheibe 3 des Ringfilterelementes 1, so dass in einem anschließenden Arbeitsschritt der Schmutztopf 5 mit der Endscheibe 3 verbunden, insbesondere verschweißt werden kann. Denkbar ist selbstverständlich auch ein Anschweißen des Wasserabscheiders 6 an der unteren Endscheibe 3 nach dem Anschweißen des Schmutztopfes 5 an der unteren Endscheibe 3, wobei in diesem Fall der Wasserabscheider 6 durch eine bodenseitige Öffnung des Schmutztopfes 5 nachträglich eingeführt werden muss.

Betrachtet man die Fig. 1 bis 3, so kann man erkennen, dass an den Pins 7,7' das heißt insbesondere an dessen Pinkopf, jeweils zumindest ein Dichtelement 11,11' angeordnet ist, das den jeweiligen Kanal 9,9' bei darin eingreifendem Pin 7,7' dicht verschließt. Das zumindest eine Dichtelement 11,11' kann dabei beispielsweise als gewöhnliche O-Ring-Dichtung ausgebildet sein. Betrachtet man die Fig. 2, so kann man erkennen, dass der Pin 7 einen im Querschnitt kreuzförmigen Stiel 12 und den vorab erwähnten, sich daran anschließenden Pinkopf aufweist, wobei das Querschnittsprofils des Stils 12 dem Pin 7 eine hohe Steifigkeit verleiht. Zum korrekten Einführen der Pins 7,7' in den Leerlaufkanal 9 bzw. in den Entsorgungskanal 9', kann am Filtergehäusetopf oder aber an dem Funktionselement 8 eine Führung 13 vorgesehen sein, mit welcher bestenfalls die Pins 7,7' reibungsarm zum zugehörigen Kanal 9,9' gleiten. Die Führung 13 kann dabei beispielsweise rampenartig ausgebildet sein. Denkbar ist auch, dass die beiden Pins 7,7' in Umfangsrichtung um ca. 180° versetzt zueinander angeordnet sind. Sofern die beiden Pins 7,7' eine unterschiedliche axiale Länge aufweisen, kann auch lediglich einer der beiden Pins 7,7' als Führungshilfe verwendet werden. Selbstverständlich können die Pins 7,7' auch einen unterschiedlichen Durchmesser aufweisen, wobei denkbar ist, dass der Pin 7 einen größeren Durchmesser an seinem Pinkopf aufweist, um ein schnelles Leerlaufenlassen der Filtereinrichtung 14 beim Austausch des Ringfilterelementes 1 zu ermöglichen.

Die Erfindung betrifft dabei nicht nur eine komplette Filtereinrichtung 14, bestehend aus Filtergehäuse und Filtergehäusetopf sowie darin angeordnetem Funktionselement 8 und Ringfilterelement 1, sondern auch das Ringfilterelement 1 als separates Bauelement, insbesondere für den Ersatzteilmarkt. Durch die einteilige Ausbildung des Ringfilterelementes 1 zusammen mit dem Schmutztopf 5 und insbesondere durch die einteilige Ausbildung der Pins 7,7' und des Schmutztopfes 5, kann somit ein Komplettteil, insbesondere auch für den Ersatzteilmarkt, geschaffen werden, welches einerseits kostengünstig ist und welches andererseits gewährleistet, dass keine ungeeigneten und nicht autorisierten Fabrikate Verwendung finden, welche die Filterleistung schwächen und dadurch unter Umständen Schäden erzeugen können. Selbstverständlich können dabei sowohl die Pins 7,7' als auch der Schmutztopf 5 aus kostengünstigem Kunststoff, insbesondere als Kunststoffspritzgussteil, ausgebildet sein.

Betrachtet man die Fig. 4, so kann man erkennen, dass das Ringfilterelement 1 stehend in der Filtereinrichtung 14 angeordnet ist und der Schmutztopf 5 direkt mit der unteren Endscheibe 3 verbunden ist. Innerhalb des Schmutztopfes 5 ist dabei der Wasserabscheider 6 angeordnet, wobei deutlich zu erkennen ist, dass bodenseitig des Schmutztopfes 5 der hohle Pin 7' eine kommunizierende Verbindung mit einem Inneren des Schmutztopfes 5 und dem Entsorgungskanal 9' ermöglicht. Um 180° gegenüberliegend ist dabei der Pin 7 angeordnet, der im gezeigten Zustand dicht in den Leerlaufkanal 9 eingreift. Wie bereits weiter oben erwähnt, ist an den jeweiligen Pins 7,7' ein jeweiliges Dichtelement 11,11' angeordnet, um deren dichte Einführung in den jeweiligen zugehörigen Kanal 9,9' zu ermöglichen, wobei zusätzlich ein Dichtelement 11" an einem Stutzen 15 des Schmutztopfes 5 angeordnet ist. Dabei ist selbstverständlich klar, dass die beiden Pins 7 und 7' nicht unbedingt in Umfangsrichtung um 180° zueinander versetzt angeordnet sein müssen, sondern beispielsweise auch in einem beliebigen zwischen 0° und 180° liegenden Winkel.

## Patentansprüche

1. Kraftstofffilter (14) mit einem in einem Filtergehäuse (10) stehend angeordneten Ringfilterelement (1), das eine obere Endscheibe (2) und eine untere Endscheibe (3) aufweist,
**dadurch gekennzeichnet, dass**
- an der unteren Endscheibe (3) ein Schmutztopf (5) mit einem darin angeordneten Wasserabscheider (6) vorgesehen ist,
- der Schmutztopf (5) zwei abstehende, stutzenförmige Pins (7,7') aufweist, von denen einer im Einbauzustand in einen Leerlaufkanal (9) und der andere in einen Entsorgungskanal (9') eingreift, wobei der zweite Pin (7') hohl ausgebildet ist und ein Inneres des Schmutztopfes (5) kommunizierend mit dem Entsorgungskanal (9') verbindet.

2. Kraftstofffilter nach Anspruch 1,
**dadurch gekennzeichnet,**
- **dass** der Wasserabscheider (6) als Coaleszer ausgebildet und an die untere Endscheibe (3) des Ringfilterelements (1) angeschweißt ist, und/oder
- **dass** der Schmutztopf (5) und an die untere Endscheibe (3) des Ringfilterelements (1) angeschweißt ist.

3. Kraftstofffilter nach einem der Ansprüche 1 oder 2,
**dadurch gekennzeichnet,**
**dass** die beiden Pins (7,7') in Umfangsrichtung um ca. 180° versetzt zueinander angeordnet sind.

4. Kraftstofffilter nach einem der Ansprüche 1 bis 3,
**dadurch gekennzeichnet,**
**dass** am Filtergehäusetopf oder an dem Funktionselement (8) eine Führung (13) vorgesehen ist, welche zumindest einen Pin (7,7') zu dem zugehörigen Kanal (9,9') führt.

5. Kraftstofffilter nach einem der Ansprüche 1 bis 4,
**dadurch gekennzeichnet,**
- **dass** die beiden Pins (7,7') eine unterschiedliche axiale Länge aufweisen, und/oder
- **dass** die beiden Pins (7,7') einen unterschiedlichen Durchmesser aufweisen.

6. Ringfilterelement (1) für ein Kraftstofffilter (14) nach einem der Ansprüche 1 bis 5,
**dadurch gekennzeichnet, dass**
- an der unteren Endscheibe (3) ein Schmutztopf (5) mit einem darin angeordneten Wasserabscheider (6) vorgesehen ist,
- am Schmutztopf (5) zwei abstehende, stutzenförmige Pins (7,7') angeordnet sind.

## Claims

1. A fuel filter (14) comprising a ring filter element (1) that is arranged in an upright position in a filter housing (10) and that has an upper end disc (2) and a lower end disc (3),
**characterized in that**
- a dirt pot (5) with a water separator (6) arranged therein is provided at the lower end disc (3),
- the dirt pot (5) has two protruding nozzle-shaped pins (7, 7'), one of which engages in the installed state into a drain channel (9) and the other one into a discharge channel (9'), wherein the second pin (7') is formed to be hollow and communicatively connects an interior of the dirt pot (5) to the discharge channel (9').

2. The fuel filter according to claim 1,
**characterized in**
- **that** the water separator (6) is formed as a coalescer and is welded to the lower end disc (3) of the ring filter element (1), and/or
- **that** the dirt pot (5) is welded to the lower end disc (3) of the ring filter element (1).

3. The fuel filter according to claims 1 or claim 2, **characterized in that** the two pins (7, 7') are arranged to be offset to one another in the circumferential direction by approximately 180°.

4. The fuel filter according to any one of the claims 1 to 3, **characterized in that** a guide (13) is provided on the filter housing pot or on the functional element (8), which guide guides at least one pin (7, 7') to the associated channel (9, 9').

5. The fuel filter according to any one of the claims 1 to 4,
**characterized in**
- **that** the two pins (7, 7') have different axial lengths, and/or
- **that** the two pins (7, 7') have different diameters.

6. A ring filter element (1) for a fuel filter (14) according to any one of the claims 1 to 5,
**characterized in that**
- a dirt pot (5) with a water separator (6) arranged therein is provided at the lower end disc (3),
- two protruding nozzle-shaped pins (7, 7') are arranged on the dirt pot (5).

## Revendications

1. Filtre à carburant (14) comportant un élément de filtre annulaire (1) disposé à la verticale dans un logement de filtre (10), qui présente une rondelle d'extrémité supérieure (2) et une rondelle d'extrémité inférieure (3), **caractérisé en ce que**
- sur la rondelle d'extrémité inférieure (3) un pot à impuretés (5) à l'intérieur duquel est disposé un séparateur d'eau (6) est prévu,
- le pot à impuretés (5) présente deux goupilles (7, 7') en forme d'embout, faisant saillie, desquelles une en l'état de montage vient en prise dans un canal de marche à vide (9) et l'autre vient en prise dans un canal d'évacuation (9'), dans lequel la deuxième goupille (7') a une configuration creuse et relie un intérieur du pot à impuretés (5) de manière communicante avec le canal d'évacuation (9').

2. Filtre à carburant selon la revendication 1, **caractérisé en ce que** :
- le séparateur d'eau (6) est conçu comme un filtre coalescent et est soudé sur la rondelle d'extrémité inférieure (3) de l'élément de filtre annulaire (1), et/ou
- le pot à impuretés (5) est soudé sur la rondelle d'extrémité inférieure (3) de l'élément de filtre annulaire (1).

3. Filtre à carburant selon une des revendications 1 ou 2, **caractérisé en ce que** les deux goupilles (7, 7') sont disposées en étant décalées l'une par rapport à l'autre d'environ 180° dans la direction circonférentielle.

4. Filtre à carburant selon une des revendications 1 à 3, **caractérisé en ce que** sur le pot de logement de filtre ou sur l'élément fonctionnel (8), une glissière de guidage (13) est prévue, qui guide au moins une goupille (7, 7') vers le canal correspondant (9, 9').

5. Filtre à carburant selon une des revendications 1 à 4, **caractérisé en ce que**
- les deux goupilles (7, 7') présente une longueur axiale différente, et/ou
- les deux goupilles (7, 7') présentent un diamètre différent.

6. Elément de filtre annulaire (1) pour filtre à carburant (14) selon une des revendications 1 à 5, **caractérisé en ce que**
- sur la rondelle d'extrémité inférieure (3) un pot à impuretés (5) à l'intérieur duquel un séparateur d'eau (6) est disposé est prévu,
- sur le pot à impuretés (5) deux goupilles (7, 7') en forme d'embout, faisant saillie sont disposées.
